# EUROPEAN PATENT APPLICATION

(11) **EP 1 799 016 A1**
(43) Date of publication of application: **20.06.2007**
(21) Application number: 06025702.9
(22) Date of filing: 12.12.2006
(51) Int. Cl.: H05B 33/10, H05B 33/14

(54) **Electroluminescent devices**

(30) Priority: 13.12.2005 GB 0525351
(71) Applicant: Tenso Technologies Limited, Hull, HU6 7RX (GB)
(72) Inventor: Kelly, James The University of Hull, Inglemire Lane Hull, HU6 7RX (GB)

(57) **Abstract**

The present invention relates to electroluminescent devices. It is concerned with improving current Electroluminescent light technology by altering its properties and creating a durable, robust product for uses in harsh environments. Properties can include but are not limited to variation in colour, texture, rigidity, reflectivity, fire retardance, tensile strength, hydrolysis and chemical resistance. It will also expand the use of electroluminescent devices by offering increased functionality by using them for data transmission or other carrier or even as a shield. A microcontroller or similar device could be used to control power and data to alter operation of electroluminescent devices.

## Description

The present invention relates to electroluminescent devices and is concerned particularly, although not exclusively, with electroluminescent devices for use with personal location beacons.

Electroluminescent light sources are known. These typically comprise two electrodes with an insulating dielectric material sandwiched between them. Applied to the surface of the dielectric material is an electroluminophor powder. In one previously considered example, when an AC voltage of between 70-200V at a frequency of between 300Hz-4kHz is applied across the dielectric an alternating electric field is established which causes the electroluminophor powder to luminesce. These light sources can be used for various applications such as back-lights for mobile phones and other personal electronic devices. Electroluminescent filaments (ELF) have been developed that work on the same concept. These comprise an inner conductive core surrounded by a dielectric insulating material that has an electroluminophor powder applied to the surface. Surrounding the electroluminophor powder is a thin conductive sheath, and wound around that in an open helix is a fine outer electrode. A flexible insulating material is formed over the helical fine outer electrode. When an AC voltage of between 70-200V at a frequency of between 300Hz-4kHz is applied across the dielectric an alternating electric field is established which causes the electroluminophor powder to illuminate. These ELFs are very fragile and have a low tensile strength and therefore have a limited number of applications.

ELFs are used in personal locator beacons. Personal locator beacons are devices, primarily used offshore, that in emergency situations can be activated so as to transmit an emergency radio signal that can be detected by emergency rescue services. The radio signal that is transmitted is internationally recognised. The personal locator beacon can either be activated by pressing a button or can be arranged so as to commence transmission automatically upon contact with water. There is also a battery-status indicator LED on the outside of the device. In such a personal locator beacon, the ELF has dual functionality; it is used as the antenna to transmit the emergency radio signal and its luminescence is used to provide a visual indication of the location of the wearer. This can be done because the two signals that are applied to the electrodes have frequencies that are sufficiently different that they do not interfere with each other. The emergency radio signal is 121.5MHz whereas the driving frequency for the electroluminophor is only between 300Hz and 4kHz. The ELF is fixedly connected to an electronic controller unit which is housed within the personal locator beacon body. A length of silicone tubing loosely surrounds the ELF. Although the silicone tubing provides some protection it is susceptible to chemical attack and it is difficult to seal so as to be watertight. A further disadvantage of the silicone sheath is that it can inhibit the transmission of radio signals to some extent.

There are a number of other problems with a device such as this. One of the main problems is that it is possible to activate the device accidentally. If the device is out of sight then there is no indication that this has occurred. As a result, the battery runs down. Worse, an unnecessary emergency signal is transmitted.

As previously mentioned ELFs are extremely fragile. If the ELF of a personal locator beacon is damaged, so that it cannot be used, then since the ELF is fixedly attached to the controller unit within the housing, the whole device must be replaced. This obviously results in unnecessary cost since components that are not damaged are needlessly replaced.

Most ELFs have a half-life of approximately 3000 hours. This means that after 3000 hours the brightness of the ELF has approximately halved. Again, since the ELF is fixedly attached to the controller unit within the housing the whole device must be replaced, thus resulting in unnecessary expenditure.

It is important for devices such as the previously described personal locator beacon, to have a battery-level indicator. Battery-level indicators for personal locator beacons are usually in the form of one or more LEDs mounted inside the unit with a viewing window so that the user can observe the battery status. A problem with doing this is that it is difficult to keep the unit watertight. Also the viewing angle of the LEDs is often poor.

Accordingly, it is desirable to provide an electroluminescent light source in cable form that has an increased tensile strength, compared to previously considered ELFs, is resistant to chemical and environmental attack, and is hence more usable. It is further desirable to provide a personal locator beacon with improved reliability.

According to one aspect of the present invention there is provided an electroluminescent cable, comprising an electroluminescent filament and a co-extensive protective cover, the cover surrounding the filament, wherein the filament and cover are in intimate contact.

Preferably the filament and cover are bonded together.

Preferably the cover may comprise polyurethane, and in a particularly preferred arrangement it comprises a polyurethane extrusion.

Preferably the thickness of the cover is greater than 5mm. In a particularly preferred arrangement the thickness of the cover is at least 7mm.

According to another aspect of the present invention there is provided a method of manufacturing an electroluminescent cable, the cable comprising an electroluminescent filament and a co-extensive protective cover, the cover surrounding the filament, wherein the method comprises forming the protective cover around the filament so as to ensure that the filament and cover are in intimate contact.

Preferably the method includes bonding the filament and cover together.

Preferably the cover is moulded around the filament. In a preferred arrangement a polyurethane cover is extruded around the filament.

According to a further aspect of the present invention there is provided a connector for connecting an electroluminescent cable, the cable comprising an electroluminescent filament, having an electrically conductive core, a dielectric and an outer electrode,
wherein the connector comprises a substantially rigid contact-board located at an end of the cable and positioned transversely thereto, the board comprising at least two electrode contact portions, for electrically connecting to the core and outer electrode of the cable, wherein at least one of the contact portions is located substantially centrally with respect to the cable.

Preferably there is a connector body attached on the opposite side of the contact-board to the side that the cable is attached. The connector body may comprise a 4-pin connector. Preferably there is a seal surrounding the connector body, contact-board and EL cable. The seal may be made from polyurethane and moulded around the assembly.

Preferably the contact board comprises two LEDs, an inner core terminal, and outer electrode terminal and four connector terminals.

Preferably the contact-board is a printed circuit board.

According to yet a further aspect of the present invention there is provided a personal location device, comprising an electroluminescent cable and a control unit, connected to the cable, wherein the control unit is arranged to provide an electronic driving signal to drive the luminescence of the cable, an emergency radio signal and an audible indicator.

Preferably the personal location device comprises a personal location beacon for use in emergencies. The driving signal and/or the radio signal, and/or the audible indicator, may be made to repeat a message such as an SOS message.

A preferred embodiment of the present invention will now be described, by way of example only, with reference to the accompanying diagrammatic drawings in which:
Figure 1 schematically shows a personal locator beacon device,
Figure 2 schematically shows in cross-section an embodiment of an electroluminescent cable in accordance with the present invention,
Figure 3 schematically shows both sides of a printed circuit board for use in the connector assembly,
Figure 4 schematically shows an embodiment of a connector assembly in accordance with the invention,
Figure 5 schematically shows a personal locator beacon device unit, and;
Figure 6 shows a schematic circuit diagram of a controller unit.

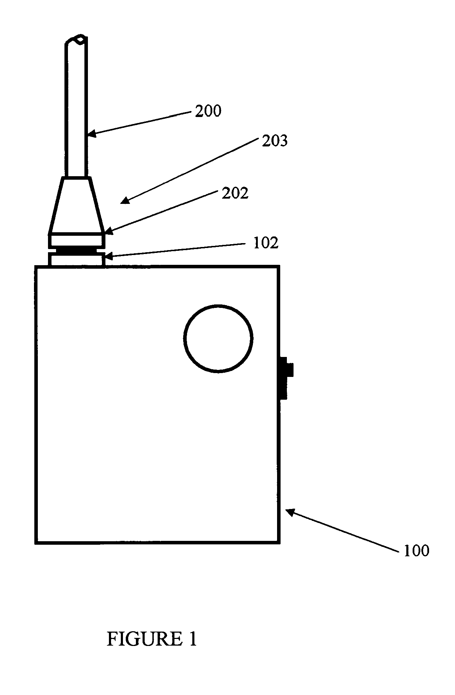

Referring to **Figure 1,** a personal locator beacon device 10 comprises a unit 100 and an electroluminescent (EL) cable 200. The EL cable 200 is connected to the unit by engagement of a 4-pin female connector 102 of the unit 100 and a 4-pin male connector 202 of the EL cable 200. The unit 100 includes electronic circuitry as will be described later.

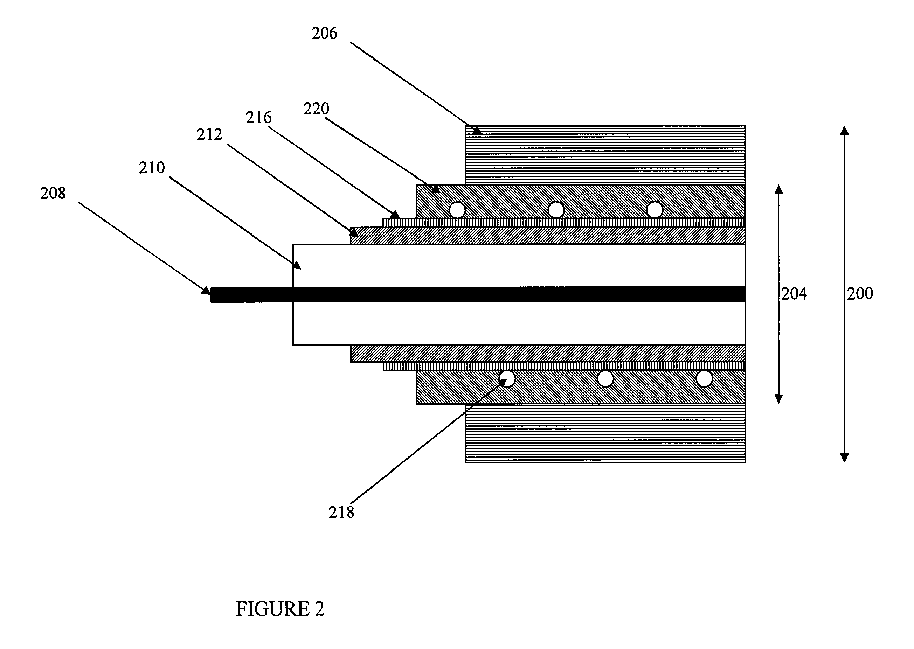

Turning now to **Figure 2,** this shows, in schematic cross-section, the EL cable 200 comprising an electroluminescent filament (ELF) 204 surrounded by a polyurethane (PUR) layer 206. The ELF 204 comprises a solid inner conductive core 208, for example of copper, surrounded by an insulating dielectric layer 210 to which is applied a mixture 212 of an electroluminophor powder and a binder, the pores of which are filled with a transparent filler. This is further surrounded by a transparent electrode 216. Wound around the electrode 216, as an open helix, is a fine outer conductive electrode 218, for example of copper. A transparent external insulator 220, for example of PVC or polyethylene, surrounds the fine electrode 218 and is the outer surface of the ELF 204. When an AC voltage of between 70-200V at a frequency of between 300Hz-4kHz is applied between the solid inner core 208 and the fine outer electrode 218, an alternating electric field is established which causes the electroluminophor coating to illuminate. Hence the ELF 204 can be used as illumination device. The ELF 204 by itself is very fragile, has low tensile strength, is susceptible to chemical attack and has a tendency to twist and kink. To counter these inherent problems the ELF 204 is coated with a polyurethane (PUR) 206 cover, of approximately 7mm thickness, which bonds to the surface of the ELF 204. This is achieved through an extrusion process in which PUR pellets are melted and forced through a die of circular profile under high pressure at the same time as feeding through an ELF. The coated ELF is then passed through a series of rollers and is cooled. This process produces an EL cable 200 that has a high tensile strength, is waterproof, resistant to chemical attack and in its resting state remains substantially straight. Further, by coating the ELF in PUR a lens effect occurs such that the illuminated region appears larger.

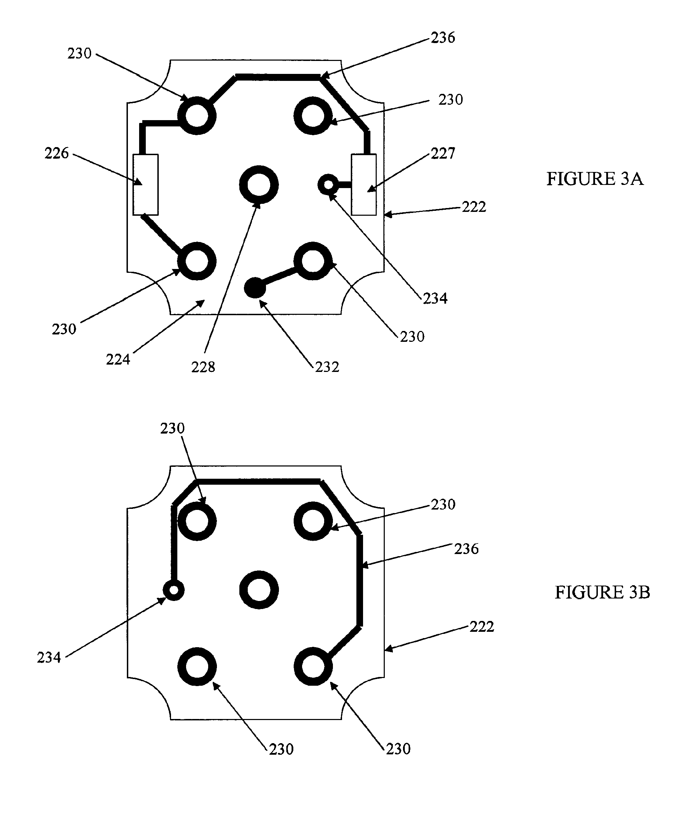

For attaching the 4-pin male connector 202 to the EL cable 200 a PCB 222 is provided, shown in **Figure 3.** The EL cable is connected to one side of the PCB 222 and the 4-pin male connector is connected to the other side of the PCB 222, the two sides of the PCB 222 are shown in **Figures 3A** and **3B** respectively. The cable side of the PCB 222 has, pre-mounted, a green LED 226, a red LED 227 and an inner core pad 228. On both sides of the PCB 222 in corresponding locations there are provided four connector pads 230, an outer electrode pad 232 and an additional pad 234. There are holes in the PCB 222 through the centre of each of these pads through which the pads on either side are electrically connected to each other. The PCB 222 is provided with conductive tracks as shown in Figure 3, these conductive tracks are overlaid with a thin insulating layer.

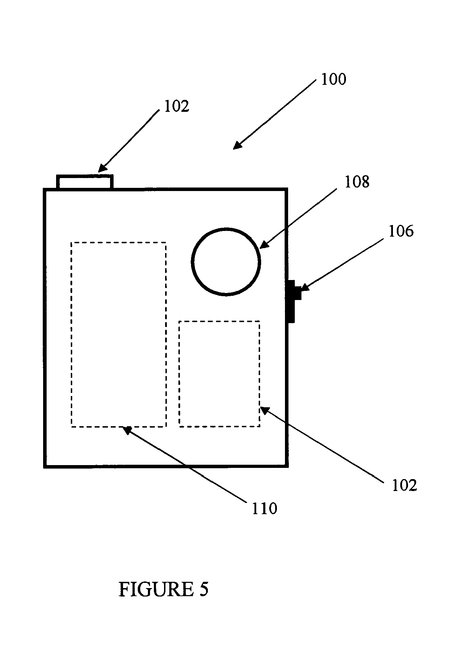

With reference to **Figure 4,** the EL cable 200 is prepared before being connected to the PCB 222. A 10mm length of the PUR cover 206 is carefully removed from the EL cable 220, without cutting the fine outer electrode 218. Approximately 2mm of the remaining coatings 210, 212, 216 are removed leaving 2mm of the solid inner core exposed. A length of transparent heat shrink 238 is shrunk over the exposed helically wound outer electrode ensuring that a length of the fine outer electrode 218 is left exposed. The solid inner core is then inserted into the inner core terminal 228 from the cable side 224 of the PCB 222 and is soldered on both sides. This holds the EL cable 200 securely and centrally and is the anchor point of the assembly. The fine outer electrode 218 is then soldered to the fine electrode terminal 232, this connection is protected by applying heat glue 242 over the connection. The 4-pin male connector 202 is then attached to the other side of the PCB 222 by inserting the connection terminals 240 into the connector pads 230 and soldering on the cable side 224. A PUR connector seal 244 is moulded around the PCB 222, 4-pin male connector 202 and EL cable 200 at high pressure to provide a secure, watertight durable assembly.

Turning to **Figure 5,** the unit 100 has located within it a battery 104 and a controller unit 110. Located on the outside of the unit 100 is the female 4-pin connector 102, a unit activation means 108, comprising a recessed button, and a mode switch 106 these are internally connected to the controller unit 110.

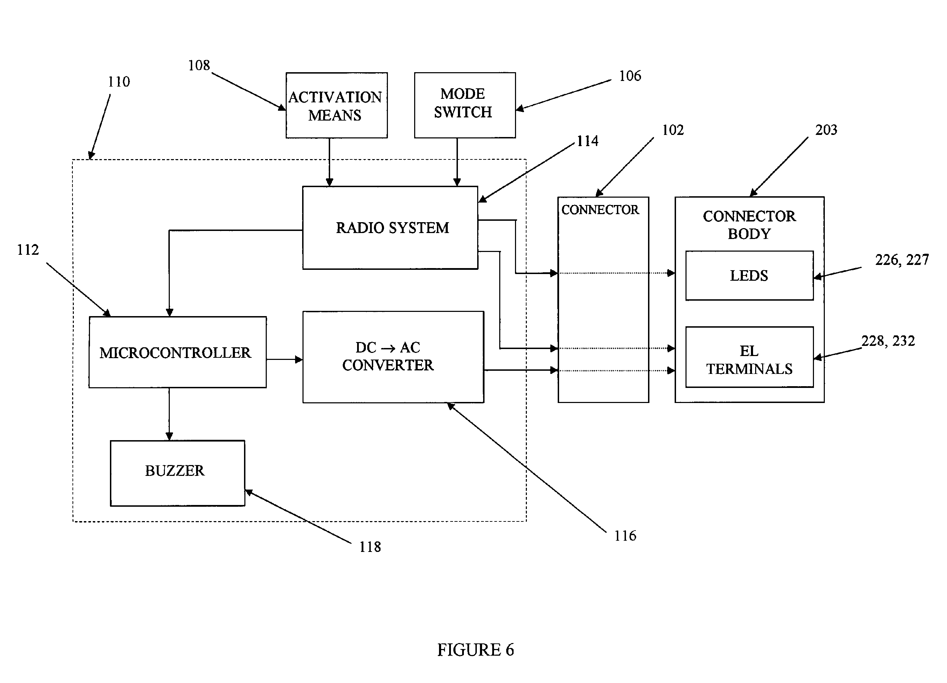

**Figure 6** shows schematically the controller unit 110, comprising a microcontroller 112, a radio system 114, a DC-AC converter 116 and a buzzer 118. The controller unit 110 is powered by a 9V battery (not shown). The activation means 106 comprises a reed switch and water-sensitive contacts. These are connected to the radio system 114 of the controller unit 110. The mode switch 106 is also connected to the radio system 114. In use, an EL cable 200, as described above, is connected to the unit 100 via the female and male 4-pin connectors 102, 202 of the unit and EL cable respectively. Two modes of operation are provided, a test mode and an armed mode These can be switched using the mode switch 206.

When in test-mode the radio system is arranged so as to only be switched on when the reed switch of the activation means 108 is held down. When in armed-mode the unit is switched on when either the reed switch is pressed once or when the water sensitive contacts become exposed to water.

When the unit is switched on the radio system 114 sends a signal to the LEDs 226, 227 of the connector assembly 203 via the connector 102. This signal relates to the battery level of the unit; when the battery voltage is greater than 4.7V the green LED 226 is illuminated, when the voltage drops below 4.7V the red LED 227 is illuminated. The radio system sends a second signal to the EL cable 200 via the connector 102, this signal depends on what mode the unit is in. The signal is transmitted from the unit using the EL cable 200 as the antennae. In test-mode a relatively low-power signal at a frequency of 121.65 MHz is transmitted, when the unit is in armed mode a much higher-powered signal at a frequency of 121.5 MHz is transmitted, this frequency being an internationally recognised emergency frequency.

A further signal is sent from the radio system 114 to the microcontroller 112, this causes the microcontroller to operate. In operation the microcontroller causes the buzzer 118 to sound in a prescribed pattern and also causes the DC-AC converter 116 to turn on and off in a prescribed manner. The DC-AC converter, when turned on, generates 200V signal at 3kHz that is applied to the EL cable 200 inner core 208 and fine outer electrode 218, this causes the cable to illuminate. The radio signal and the illumination signal do not interfere with each other because their frequencies are of different magnitudes. The microcontroller 112 can be programmed to operate the buzzer 118 and DC-AC converter 116 in any number of on/off patterns, they can either be operated with the same pattern or a different pattern. For example, the microcontroller 112 may be programmed so that when the unit is switched on the buzzer 118 sounds SOS in Morse code and the EL cable 200 flashes SOS in Morse code.

By coating an ELF with PUR a cable is produced that has a much higher tensile strength than that of the ELF on its own. Further, the EL cable can be twisted, bent and coiled without the ELF within the cable breaking. Further, by adding a connector to the end of an EL cable the EL cable of a personal locator beacon can be replaced if required. Additionally, housing battery indicator LEDs within the cable connector body eliminates the need for LEDs to be mounted on the unit, thus reducing the possibility of a non-watertight unit, and further, the battery indicator LEDs have a much wider viewing angle. The addition of an audible alert to a personal locator beacon means that even without being able to see the unit it is obvious that it has been accidentally activated.

The EL cable may have more than one cover. Additionally, the covering may be flexible or rigid, may be impregnated with luminescent polymers to further increase perceived light output, may be impregnated with fluorescent material to increase visibility, may contain a variety of other materials for aesthetic and/or practical applications, may be transparent or opaque, may be of a variety of cross-sections, may be chosen so as to have increased fire retardant properties.

The EL cable may contain multiple ELFs which may extend axially or may be twisted, multiple ELFs may be bundled around a central power distributing conductor or a central data carrying conductor or fibre optic. A wire or nylon braid may be added to the extrusion to further improve the tensile strength of the cable, the braid may be used to carry power or may be used as a shield.

The connector assembly may be fitted to both ends of a cable and may comprise male or female connectors having any number of pins and hence being suitable to attach to a multi filament cable. Multi-pole connectors can be fitted to cables with multiple filaments.

## Claims

1. The extruding over electroluminescent wire of various types with a layer of thermoplastic or other material with suitable properties to improve the characteristics of the wire.

2. According to claim 1, the electroluminescent wire can be extruded more than once to offer layers of over moulding with different properties.

3. According to claim 2, these layers do not have to be Uniform.

4. According to claims 1, 2 and 3, the material used for overmoulding can be extruded with additives which change the properties of the product

5. according to claim 4, Properties can include but are not limited to variation in colour, texture, rigidity, reflectivity, fire retardance, tensile strength, hydrolysis and chemical resistance

6. According to claims 1, 2 and 3, the material used for overmoulding can be impregnated with luminescent polymers or florescent material to further increase perceived light output or reflectivity to aid visibility.

7. According to claim 4, the material used for overmoulding may contain a variety of other materials for aesthetic effects and/or practical applications.

8. According to claim 4, the material used for overmoulding can be extruded with a transparent finish or an opaque finish to diffuse light.

9. According to claims 1 and 2, the material used for overmoulding can be extruded into a variety of shapes and sizes.

10. According to claims 1 and 2, the length of extrusion is unlimited.

11. According to claims 1 and 2, multiple electroluminescent wires can be bundled around a central power distributing conductor, of which the power carrying conductor being of single or multiple cores, and then over extruded.

12. According to claim 11, any or more than one wire can be used for data transmission.

13. According to claim 11, any or more than one wire can be used as an antenna.

14. According to claims 1 and 2, a braid can be added to the extrusion to improve tensile strength and load bearing capacity.

15. According to claims 1 and 2, the braid in all embodiments can be used to carry power, data, radio frequency waves or as a shield.

16. According to claims 1 and 2, multiple cables of any variant can be joined via a suitable connector, either male or female, either through direct connection or via a connection unit.

17. According to claims 1 and 2, a PCB can be embodied within the cable overmould to add functionality such as power level indicator or data transmission indicator.

18. According to claims 12, 13, 15 and 17, a microcontroller or similar device could be used to control power and data to alter operation of cable.

19. Apparatus as claimed in any proceeding claim substantially as herein described above and illustrated in the accompanying drawings.
